# EUROPEAN PATENT APPLICATION

(11) **EP 1 717 746 A1**
(43) Date of publication of application: **02.11.2006**
(21) Application number: 06008831.7
(22) Date of filing: 27.04.2006
(51) Int. Cl.: G06Q 20/00

(54) **Payment system, paying method and program**

(30) Priority: 28.04.2005 JP 2005131010
(71) Applicant: NEC Corporation, Minato-ku Tokyo (JP)
(72) Inventor: Takeshita, Yasunori, Tokyo (JP); Tezuka, Hiroshi, Tokyo (JP)
(74) Representative: Glawe, Delfs, Moll

(57) **Abstract**

A payment system for managing the electronic value information. The payment system includes a mobile phone (102) used by a user, a value managing server (103) installed in a shopping place, and a payment server (101) operated by a payment service provider. Authentication inquiry (S201) is sent from the mobile phone to the value managing server. After receiving the authentication result, the mobile phone requires the payment operation to the payment server through a mobile communication base station. The payment server stores the electronic value information (106) for the respective mobile phone using the payment service. The payment server carries out the settlement by using the received request (S204) and the storing electronic value information.

## Description

### Background of the Invention

### 1. Field of the Invention

The present invention relates to a payment system, a paying method and program, which carry out the paying by using an electronic value where a mobile communication terminal and the like are used.

### 2. Description of the Related Art

Conventionally, electronic money systems are provided. For example, in Japan, the system called "Edy" (a registered trademark) as noted in the URL http://www.edy.jp (written in Japanese) is provided. The user uses the system through a mobile telephone.

In the electronic money system, electronic value information is electrically written in a non-contact IC (Integrated Circuit) installed inside a mobile telephone. In the following descriptions, the non contact IC means the so called IC tag, which includes the circuit for realizing the communication function of the RFID (radio frequency identification) system. The amount of the electric value is treated like the amount of the cash. When a payment is executed at a register serving as a paying terminal, the settlement of the buying of goods or services is attained by exchanging the electronic value information between the register and the mobile telephone.

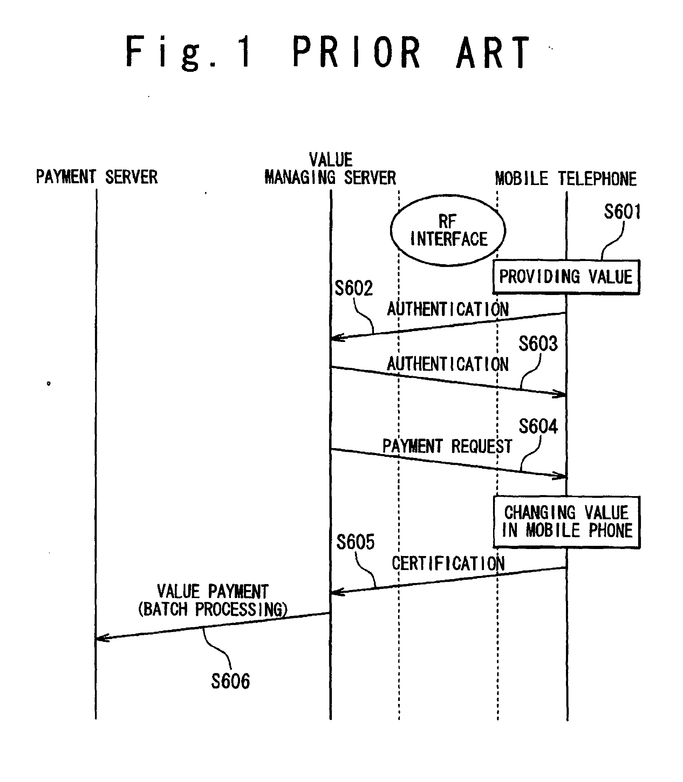

Fig. 1 shows the detailed flow of the process of the electronic money system. At first, a user, who tries to buy an article by using the electronic money, inputs the electronic value information to his/her own mobile telephone 102 (Step S601). A user can get the electronic value information in exchange for feeding cash into an electronic money charge dedicated machine. Or the user can get the electronic value information through the Internet, in which the settlement is executed by the credit card system. The electronic value information is stored in the non-contact IC built in the mobile telephone.

Next, when the user puts the mobile telephone 102 on a reader/writer (which has the both functions of reading and writing the electronic information recorded on the IC) of the paying terminal placed with the value managing server 103, the mobile telephone 102 transmits authentication information to the value managing server 103 (Step S602). The value managing server 103 is the server for managing the register serving as the paying terminal, and is usually installed inside a shop such as a convenience store.

The value managing server 103 authenticates the validity of the mobile telephone 102 and replies the information signifying whether or not it is regularly authenticated, to the mobile telephone 102 (Step S603).

After that, the paying terminal located with the value managing server 103 sends a payment request to the mobile telephone 102 (Step 5604).

The mobile telephone 102 receiving the payment request from the paying terminal located with the value managing server 103 updates the electronic value information in accordance with a predetermined application (Step S605). Consequently, the value corresponding to the price of an article to be bought is decreased.

The mobile telephone 102 sends the information about the update of the electronic value information to the value managing server 103, requests the information to be checked, and gets the result of the check (Step S605).

The value managing server 103 accumulates the update information of the electronic value information sent from the mobile telephone 102 at the step S605, communicates with a payment server (a server for the settlement) 104 at a preset timing, carries out a batch processing and transmits the update information of the electronic value information to the payment server 104 (Step S606). The payment server 104 is the server installed, for example, in the facility hold by an electronic money service company. In this manner, the value settlement process is finished.

In Japanese Laid-Open Patent Application (JP-P2001-344537A), a technique is disclosed for providing an electronic value system where an electronic bank server stores an electronic value amount stored in the UIM inside a mobile machine together with an electronic value amount inside an electronic account, and updates the electronic value amount based on the transaction using the electronic value, and consequently maintains the security and further improves the efficiency.

In Japanese Laid-Open Patent Application (JP-P2004-5421A), a integrated financial treading system and a managing method thereof is disclosed. The system has: an IC chip which is installed internally or externally to a card and a mobile communication terminal, wherein a lot of financial institution accounts information used for the treaty of clients are registered in the IC chip and various financial treading is carried out by the IC chip; a teller terminal and an automation terminal for relaying the IC chip and a financial institution through a data interface and registering new account information and the account entry breakdown to the IC chip; and an IC chip managing system for managing together.

In Japanese Laid-Open Patent Application (JP-P2003-132291A), a remaining electronic value recovery method is disclosed. The object of this method is to prevent the remaining electronic money from unauthorized use and to recover the remaining electronic money when the user has lost the mobile terminal by which the electronic money is managed.

### Summary of the Invention

The above mentioned conventional example has the following problems.

The electronic value information is stored in the non-contact IC built in the mobile telephone 102. Thus, from the electronic money service providing company side, there is the restriction that the value information stored in the mobile telephone 102 is grasped only when the value information is passed from the company side server to the mobile telephone. For monitoring the value after that, the company has to depend on the update information of the electronic value information from the value managing server 103 based on the batch process.

It is therefore an object of the present invention to provide a payment system, a paying method and program, which carry out the management of an electronic value information by using the payment server and executes the payment.

According to the present invention, a payment system for managing the electronic value information is provided. The payment system includes a mobile phone used by a user, a value managing server installed in a shopping place, and a payment server operated by a payment service provider. Authentication inquiry is sent from the mobile phone to the value managing server. After receiving the authentication result, the mobile phone requires the payment operation to the payment server through a mobile communication base station. The payment server stores the electronic value information for the respective mobile phone using the payment service. The payment server carries out the settlement by using the received request and the storing electronic value information.

More specifically, according to an aspect of the present invention, the payment system includes: a value managing server receiving authentication information from a mobile communication terminal used for a payment and sending an authentication result of an authentication of a validity of a function of paying of the mobile communication terminal in response to the received authentication information to the mobile communication terminal; the mobile communication terminal receiving the authentication information from the value managing server and send a payment request which includes the received authentication result, identification information assigned to the mobile communication terminal and to-be-paid electrical value information representing a value to be paid; and a payment server storing an accumulated electrical value information which corresponds to the identification information, carry out a settlement based on the accumulated electrical value information and the to-be-paid electrical information when receiving the payment request, and send certification information generated by the settlement to the mobile communication terminal.

According to an another aspect of the present invention, the mobile communication terminal and the value managing server communicate the authentication information and the authentication result each other through the RFID (radio frequency identification) system.

According to further another aspect of the present invention, the accumulated value information is stored also in the mobile communication terminal. The payment server stores validity information indicating a validity of the accumulated electronic value information. The mobile communication terminal carries out a check of the validity information through a communication with the payment server at a predetermined timing.

According to further another aspect of the present invention, the payment server forbids the settlement for the mobile communication terminal identified by the identification information inputted to the payment server in response to a predetermined inquiry inputting operation in which the identification information is specified.

According to further another aspect of the present invention, the payment server rejects the check by the mobile communication terminal specified by the identification information inputted to the payment server in response to a predetermined inquiry inhibiting operation in which the identification information is specified.

According to further another aspect of the present invention, the payment system further includes an another mobile communication terminal. The mobile communication terminal sends the payment request in which the identification information specifying the mobile communication terminal itself when the mobile communication terminal receives a electrical value using request from the another mobile communication terminal.

According to further another aspect of the present invention, the payment further includes an another mobile communication terminal receiving the authentication information from the value managing server and send the payment request which includes the received authentication result, the identification information assigned to the another mobile communication terminal and the to-be-paid electrical value information representing a value to be paid. The mobile communication terminal and another mobile communication terminal transfer the electrical value information each other by using the accumulated electrical value information.

According to an aspect of the present invention, a paying method includes the steps of: a value managing server receiving authentication information from a mobile communication terminal used for a payment and send an authentication result of an authentication of a validity of a function of paying of the mobile communication terminal in response to the received authentication information to the mobile communication terminal; the mobile communication terminal receiving the authentication information from the value managing server and send a payment request which includes the received authentication result, identification information assigned to the mobile communication terminal and to-be-paid electrical value information representing a value to be paid; and a payment server storing an accumulated electrical value information which corresponds to the identification information, carrying out a settlement based on the accumulated electrical value information and the to-be-paid electrical information when receiving the payment request, and sending certification information generated by the settlement to the mobile communication terminal.

According to an aspect of the present invention, a computer readable software product executes a paying method carried out by a mobile communication terminal. The method includes the steps of: sending authentication information to a value managing server through the RFID system; receiving an authentication result of an authentication of a validity of a function of a paying of the mobile communication terminal generated by the value managing server in response to the authentication information through the RFID system; sending a payment require in which the authentication result, identification information assigned to the mobile communication terminal and to-be-paid electrical value information representing a value to be paid to a payment server through a mobile communication base station; and receiving certification information issued by a settlement operation of the payment server in response to the payment request.

According to the payment system, the paying method and program of the present invention, the management of the electronic value information can be executed by using the payment server without using the mobile communication terminal, and the payment can be executed.

### Brief Description of the Drawings

Fig. 1 is a view showing the flow of the paying process in a conventional payment system;
Fig. 2 is a schematic view of the structure of the payment system in the first to fourth embodiments of the present invention;
Fig. 3 is a view showing the flow of the settlement process in the first embodiment of the present invention;
Fig. 4 is a view showing the flow of the settlement inhibiting process in the second embodiment of the present invention;
Fig. 5 is a view showing the flow of the settlement process in the third embodiment of the present invention; and
Fig. 6 is a view showing the flow of the payment inhibiting process in the fourth embodiment of the present invention.

### Description of the Preferred Embodiments

The first embodiment of the present invention will be described below with reference to the drawings.

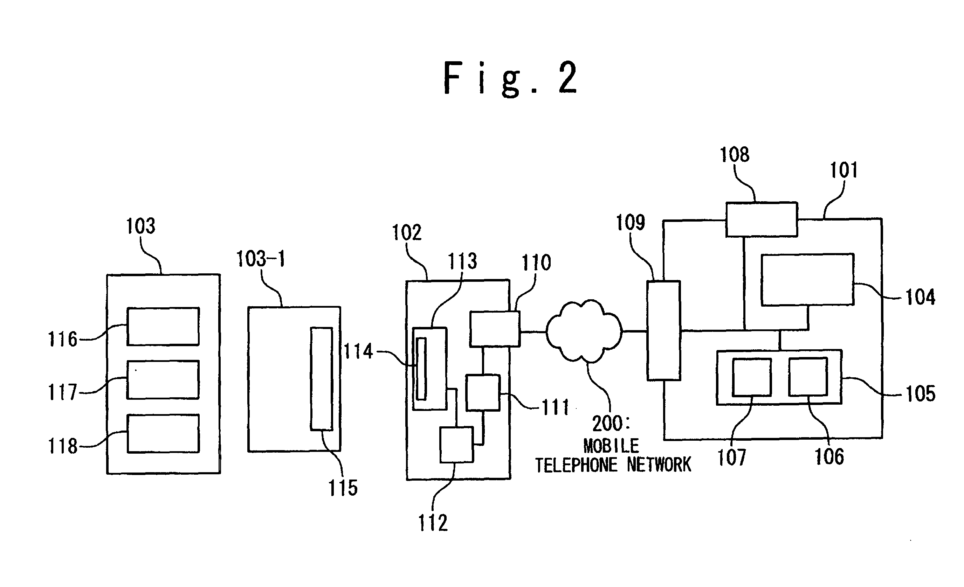

With reference to Fig. 2, the payment system in this embodiment is provided with a payment server 101, a mobile telephone 102, a value managing server 103 and a paying terminal 103-1. The operations of the payment server 101, the mobile telephone 102, the value managing server 103 and the paying terminal 103-1 are controlled by the program recorded in computer-readable mediums and read and operated by computers. The payment server 101 and the mobile telephone 102 are connected through a mobile telephone network 200 to each other. The mobile telephone network 200 is preferably the mobile communication network. However, it may be any network. For example, it may be an optical fiber network, the Internet, a public line, LAN (Local Area Network), ADSL (Asymmetric Digital Subscriber Line) and the like. The communicating method may be wired or wireless.

The payment server 101 is the information processing apparatus installed in the facility of an electronic money service company and includes a paying processing unit 104, a user information storing unit 105, an Internet side interface 108 and a mobile telephone network interface 109.

Also, in the user information storing unit 105 of the payment server 101, there are a user side information area 106 and a shop side information area 107 where the electronic value information having the money values used by a user are stored.

The mobile telephone 102 is the mobile telephone possessed by the user and having a built-in non-contact IC and includes a network interface 110, a mobile communication processing unit 111, a non-contact IC information processing unit 112, a non-contact IC 113 and a non-contact IC external interface 114. Moreover, the mobile telephone 102 includes a wireless communication unit, a display, an input device, a sound processing unit such as microphone and speaker, a memory, a controller. As he mobile telephone 102, the PDA (Personal Digital Assistant), the notebook computer can be adopted instead of the mobile phone having the above mentioned configurations.

The value managing server 103 is an information processing apparatus installed in a shop such as a convenience store where goods are sold, and has a function for controlling the paying terminal 103-1 and also includes an authenticating unit 116, a payment requesting unit 117 and a payment checker 118.

The paying terminal 103-1 is the information processing apparatus installed with the register in the convenience store or the like and has a non-contact IC external interface 115. The non-contact IC external interface 115 may be realized.as a part of the machine including a reader writer. The paying terminal 103-1 is not always required to be the dedicated apparatus. It may be assembled as a part of the function of the value managing server 103.

The user can use the Internet side interface 108 or the mobile telephone network interface 109 from the mobile telephone 102 and consequently use the electronic value based on the electronic value information having the value as the money recorded in the user side information area 106.

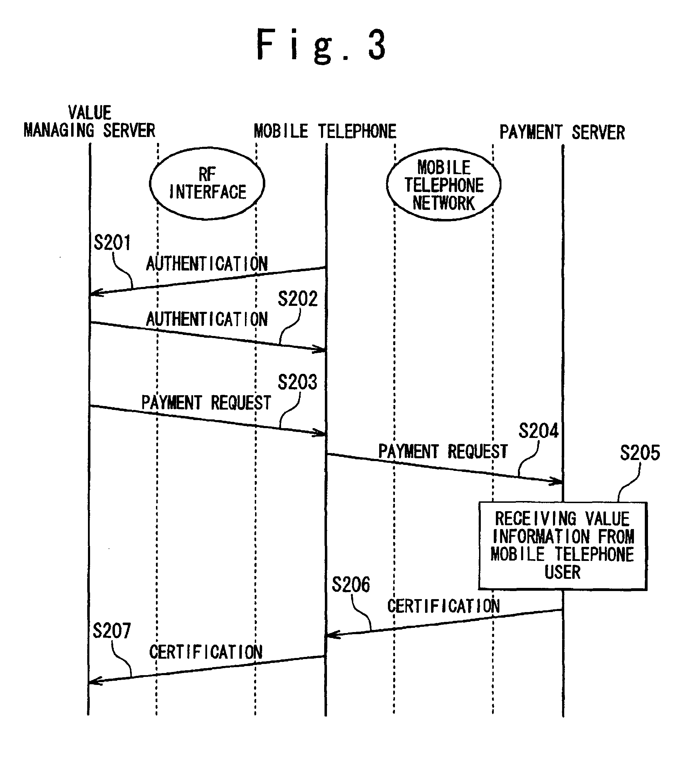

The flow of the payment processing operation in this embodiment will be described below with reference to Fig. 3. Hereafter, it is supposed that a predetermined electronic value information (for example, a value corresponding to the amount of money 5, 000 yen) is stored in advance in the user side information area 106 of the user information storing unit 105 in the payment server 101. This is attained when a user buys the electronic value and registers the information of the electronic value to the payment server 101.

At first, when the user who desires to buy an article A (the price of which is 3,000 yen) listed in the shop of the convenience store holds the mobile telephone 102 over the reader writer of the paying terminal 103-1 located on the side of the value managing server 103, the mobile telephone 102 transmits the authentication information to the paying terminal 103-1 on the side of the value managing server 103 from the non-contact IC external interface 114 (Step S201).

The paying terminal 103-1 on the side of the value managing server 103 receives the authentication information by using the non-contact IC external interface 115. Then, the authenticating unit 116 of the value managing server 103 authenticates the mobile telephone 102 in accordance with the authentication information and replies the information as to whether or not it is regularly authenticated, to the mobile telephone 102 (Step S202). The steps S201, S202 are similar to those of the conventional authentication processing operation.

After that, the paying terminal 103-1 on the side of the value managing server 103 sends a payment request to the mobile telephone 102 (Step S203). For example, the identification information of the mobile telephone 102 and the information of the value (the price 3,000 yen of the article A) of the consumed electronic value and the like are included in this payment request. The payment request is generated by the payment requesting unit 117 of the value managing server 103.

The mobile telephone 102 receives the payment request through the non-contact IC interface 114. After it is once received by the non-contact IC 113, it is processed by the non-contact IC processing unit 112. Then, a signal indicating the fact that the payment request is received is sent to the mobile telephone communication processing unit 111.

The mobile telephone communication processing unit 111 processes the signal received from the non-contact IC processing unit 112. The payment request is sent from the network interface 110 through the mobile telephone network 200 to the payment server 101 (Step S204).

Conventionally, in the state corresponding to the step S204, the mobile telephone 102 receiving the payment request from the paying terminal located on the side of the value managing server 103 changed the electronic value information stored in the mobile telephone itself, by the operation of an preinstalled application. Namely, 2,000 yen after the value corresponding to 3,000 yen of the article is subtracted from 5,000 yen is used as the electronic value information after the change and stored in the mobile telephone 102 itself.

Again in Fig. 3, next, the payment server 101 receives the payment request through the mobile telephone network interface 109. The received identification information of the mobile telephone 102 and the information of the value (the price 3,000 yen of the article A) of the consumed electronic value are processed by the paying processing unit 104 (Step S205).

At this time, the payment server 101 transfers the value (the price 3,000 yen of the article A) of the electronic value from the user side information area 106 in the user information storing unit 105 to the shop side information area 107 and carries out the paying process. That is, supposing that the electronic value information of the value corresponding to 5, 000 yen is stored in advance in the user side information area 106, the electronic value information of the value corresponding to the price 3, 000 yen of the article A is subtracted from the user side information area 106 and added to the shop side information area 107. Thus, the electronic value information of the value corresponding to the subtracted 2,000 yen is stored in the user side information area 106, and the electronic value information of the value corresponding to the price 3,000 yen of the article A is stored in the shop side information area 107.

After the process is ended, the payment server 101 transmits the certification information of the payment from the mobile telephone network interface 109 through the mobile telephone network 200 to the mobile telephone 102 (Step S206). The certification information of the payment is generated by using the electronic value information stored in the shop side information area 107.

The mobile telephone 102 receives the certification information of the payment, processes it therein and sends the certification information of the payment from the non-contact IC interface 114 to the value managing server 103 (Step S207). The payment checker 118 of the value managing server 103 receives the certification information of the payment. From the above-mentioned series of the flows, the paying process can be attained.

The second embodiment of the present invention will be described below in detail with reference to the drawings.

In the first embodiment of the present invention, the method of using the payment system in the regular state has been described. However, in this embodiment, for example, a case is assumed in which, after the mobile telephone 102 is lost, the predetermined operation of the user inhibits the utilization of the electronic value from the mobile telephone network interface 109 in the payment server 101.

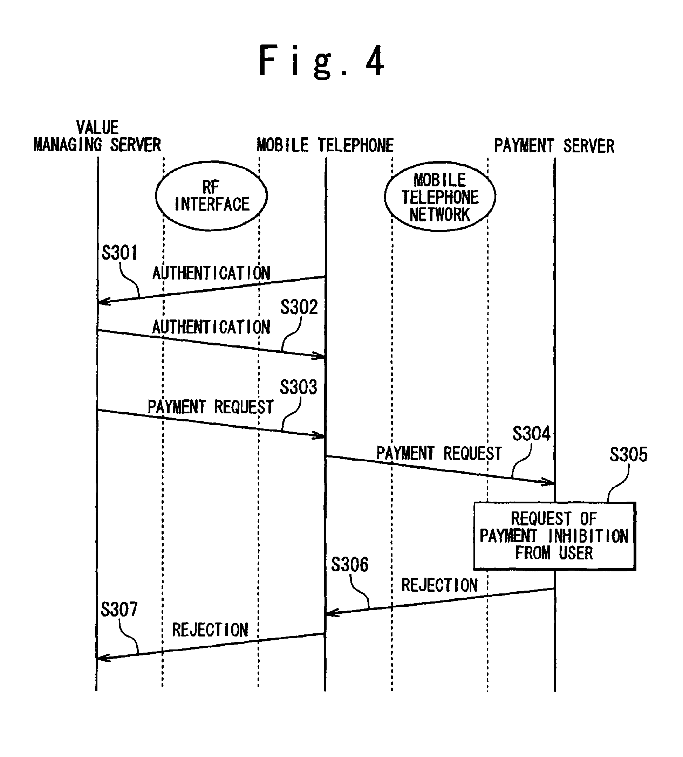

The flow of the operation for processing the payment inhibition in this embodiment will be described below with reference to Fig. 4.

At first, when the user who desires to buy an article A (a price 3,000 yen) listed in the shop of the convenience store holds the mobile telephone 102 over the reader writer of the paying terminal 103-1 located on the side of the value managing server 103, the mobile telephone 102 transmits the authentication information to the paying terminal 103-1 on the side of the value managing server 103 from the non-contact IC external interface 114 (Step S301).

The paying terminal 103-1 on the side of the value managing server 103 receives the authentication information from the non-contact IC external interface 115. Then, the authenticating unit 116 of the value managing server 103 authenticates the mobile telephone 102 in accordance with the authentication information and replies the information as to whether or not it is regularly authenticated, to the mobile telephone 102 (Step S202).

After that, the paying terminal 103-1 located on the side of the value managing server 103 sends the payment request to the mobile telephone 102 (Step S303). For example, the identification information of the mobile telephone 102 and the information of the value (the price 3, 000 yen of the article A) of the consumed electronic value and the like are added to the payment request.

The mobile telephone 102 receives the payment request from the non-contact IC interface 114. After it is received by the non-contact IC 113, it is processed by the non-contact IC processing unit 112. Then, the signal indicating the fact of the payment request is sent to the mobile telephone communication processing unit 111.

The mobile telephone communication processing unit 111 processes the signal received from the non-contact IC processing unit 112. The payment request is sent from the network interface 110 through the mobile telephone network 200 to the payment server 101 (Step S304).

In the payment server 101, the payment request is received by the mobile telephone network interface 109. The paying processing unit 104 judges whether or not the payment inhibition is set. Then, if the setting of the payment inhibition is executed, the paying process is not executed (Step S305). The setting of the payment inhibition is executed by carrying out the setting of not performing the paying process based on the payment request from the mobile telephone 102 on the payment server 101, through the Internet side interface 108 of the payment server 101 via the Internet from an available information processing device, when the user notices that the mobile telephone 102 is lost and the like. Also, this may be executed by performing a provisioning to make the access from the mobile telephone 102 invalid.

The payment server 101 transmits a rejection information of the payment from the mobile telephone network interface 109 through the mobile telephone network 200 to the mobile telephone 102 (Step S306).

The mobile telephone 102 receives the rejection information of the payment, processes it therein and sends the rejection information of the payment from the non-contact IC interface 114 to the value managing server 103 (Step S307). With the above-mentioned series of the flows, the payment request requested from the mobile telephone 102 is rejected, and the payment is not completed. Consequently, the utilization of the electronic value from the mobile telephone 102 can be safely used.

The third embodiment of the present invention will be described below in detail with reference to the drawings.

The payment system in this embodiment is similar in basic configuration to the first embodiment. Thus, the redundant explanation is omitted. The configuration where the value information is stored not only in the user side information area 106 of the user information storing unit 105 in the payment server 101 but also in the non-contact IC 113 in the mobile telephone 102 differs from the first embodiment.

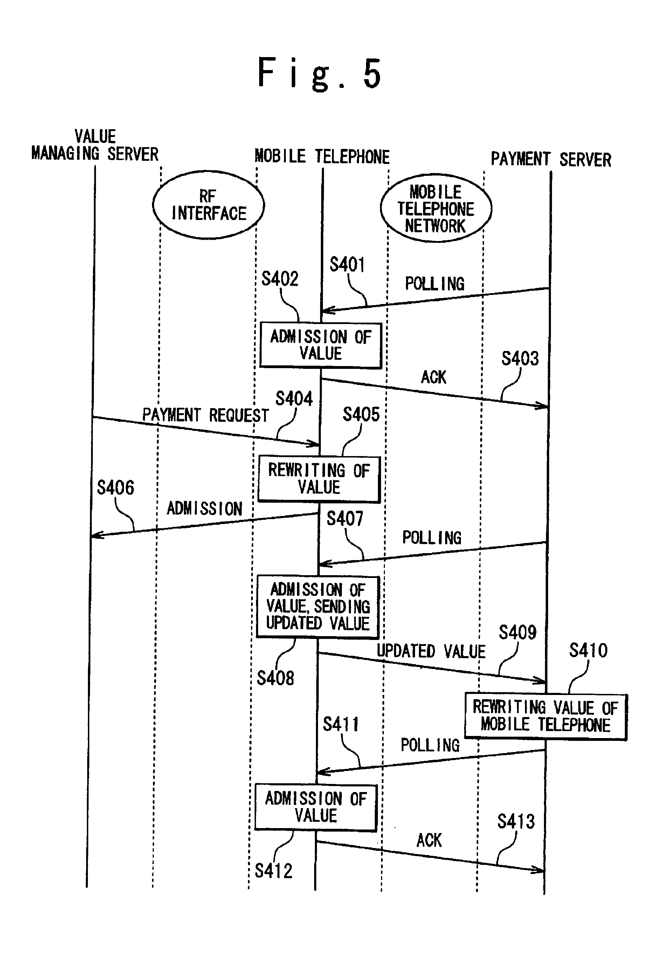

The flow of the paying processing operation in this embodiment will be described below with reference to Fig. 5. Hereafter, it is supposed that the predetermined electronic value information (for example, the value corresponding to 5,000 yen) is stored in advance in the user side information area 106 of the user information storing unit 105 in the payment server 101 and the non-contact IC 113 in the mobile telephone 102. This storing is attained when the user registers the information of the electronic value bought by the user in the payment server 101 and the mobile telephone 102.

At first, the payment server 101 performs an inquiry by means of a polling for an admission of the electronic value information on the mobile telephone 102, through the mobile telephone network 200 from the mobile telephone network interface 109 (Step S401).

The mobile telephone 102 receives the polling from the network interface 110, and the non-contact IC processing unit 112 processes the polling, and a signal indicating the fact of the polling is sent to the mobile telephone communication processing unit 111.

The mobile telephone communication processing unit 111 processes the signal received from the non-contact IC processing unit 112 and sends a response (ACK) from the network interface 110 through the mobile telephone network 200 to the payment server 101, and the electronic value information is consequently admitted (Step S402, Step S403). That is, the electronic value in the non-contact IC 113 is also made valid.

Next, when the user who desires to buy the article A (the price of which is 3,000 yen) listed in the shop of the convenience store holds the mobile telephone 102 over the reader writer of the paying terminal 103-1 located on the side of the value managing server 103, the mobile telephone 102 transmits the authentication information to the paying terminal 103-1 on the side of the value managing server 103 from the non-contact IC external interface 114. The paying terminal 103-1 on the side of the value managing server 103 receives the authentication information from the non-contact IC external interface 115. Then, the authenticating unit 116 of the value managing server 103 authenticates the mobile telephone 102 in accordance with the authentication information and replies the information as to whether or not it is regularly authenticated, to the mobile telephone 102. After that, the paying terminal 103-1 located on the side of the value managing server 103 sends the payment request to the mobile telephone 102 (Step S404). For example, the identification information of the mobile telephone 102 and the information of the value (the price 3,000 yen of the article A) of the consumed electronic value are added to the payment request.

The mobile telephone 102 receives the payment request through the non-contact IC interface 114. After it is received by the non-contact IC 113, it is processed by the non-contact IC processing unit 112. Then, the mobile telephone 102 rewrites (updates) the electronic value information stored in the mobile machine itself to the value of the electronic value through a predetermined application (Step S405). That is, 2,000 yen after the value corresponding to 3,000 yen of the article is subtracted from 5,000 yen is assumed to be the electronic value information after the change, and it is stored in the mobile telephone 102 itself.

The mobile telephone 102 reports the update of the electronic value information to the side of the value managing server 103, requires and obtains the admission (Step S406).

Then, the payment server 101 again repeatedly executes the inquiry by means of the polling for the admission of the electronic value information to the mobile telephone 102 through the mobile telephone network 200 from the mobile telephone network interface 109 at a predetermined timing (Step S407).

The mobile telephone 102 receives the polling from the network interface 110, and it is processed by the non-contact IC processing unit 112, and the signal indicating the fact of the polling is sent to the mobile telephone communication processing unit 111.

The mobile telephone communication processing unit 111 processes the signal received through the non-contact IC processing unit 112 and sends the information of the value of the re-written electronic value and the response (ACK) to the payment server 101 through the mobile telephone network 200 from the network interface 110, and the re-written electronic value information is consequently admitted (Step S408, Step S409).

The payment server 101 updates the recorded data of the user side information area 106 by the re-written value and finishes the payment (Step S410). That is, 2, 000 yen after the value corresponding to 3,000 yen of the article is subtracted from 5, 000 yen is assumed to be the electronic value information after the update, and it is stored in the user side information area 106.

Then, the payment server 101 carries out the inquiry by means of the polling for the admission of the electronic value information to the mobile telephone 102, and the mobile telephone 102 repeats the series of the processes to send the response (ACK) to the payment server 101 (Step S412, Step S413).

According to this embodiment, in association with the action when the user buys the article, if the payment is desired to be executed, the mobile telephone can be used to attain the payment only between the non-contact IC and the value managing server.

The fourth embodiment of the present invention will be described below in detail with reference to the drawings.

In the third embodiment of the present invention, the method of using the payment system in the regular state is described. However, this embodiment assumes, for example, a case where, after the mobile telephone 102 is lost, the predetermined operation for stopping the polling of the user inhibits the utilization of the electronic value from the mobile telephone network interface 109.

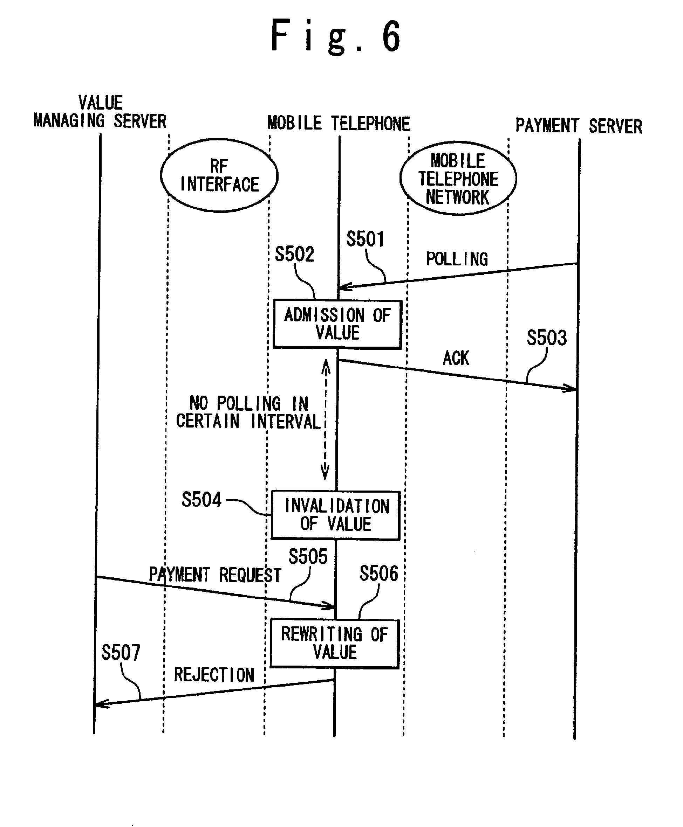

The flow of the operation for processing the payment inhibition in this embodiment will be described below with reference to Fig. 6.

At first, the payment server 101 performs the inquiry by means of the polling for the admission of the electronic value information on the mobile telephone 102, through the mobile telephone network 200 from the mobile telephone network interface 109 (Step S501).

The mobile telephone 102 receives the polling from the network interface 110, and the non-contact IC processing unit 112 processes it, and the signal indicating the fact of the polling is sent to the mobile telephone communication processing unit 111.

The mobile telephone communication processing unit 111 processes the signal received through the non-contact IC processing unit 112 and sends the response (ACK) from the network interface 110 through the mobile telephone network 200 to the payment server 101, and the electronic value information is consequently admitted (Step S502, Step S503). That is, the electronic value in the non-contact IC 113 is also made valid.

If the mobile telephone 102 does not receive the polling from the network interface 110 for a certain period, the electronic value information is not admitted, and the electronic value inside the non-contact IC 113 is made invalid (Step S504).

Next, when the user who desires to buy an article A (a price 3, 000 yen) listed in the shop of the convenience store holds the mobile telephone 102 over the reader writer of the paying terminal 103-1 located on the side of the value managing server 103, the mobile telephone 102 transmits the authentication information to the paying terminal 103-1 on the side of the value managing server 103 from the non-contact IC external interface 114. The paying terminal 103-1 on the side of the value managing server 103 receives the authentication information from the non-contact IC external interface 115. Then, the authenticating unit 116 of the value managing server 103 authenticates the mobile telephone 102 in accordance with the authentication information and replies the information as to whether or not it is regularly authenticated, to the mobile telephone 102. After that, the paying terminal 103-1 located on the side of the value managing server 103 sends the payment request to the mobile telephone 102 (Step S505).

The mobile telephone 102 processes the payment request and sends the rejection information from the non-contact IC interface 114 to the value managing server 103, because the electronic value inside the non-contact IC 113 is already invalid (Step S506, Step S507). With the series of the flows, the payment request requested by the value managing server 103 is rejected, and the payment is not carried out. Consequently, the user can safely use the electronic value of the mobile telephone 102.

According to the above-mentioned embodiment, without any action from the payment server 101 of the command for instructing the mobile telephone 102 to execute the invalidation forcibly, the payment can be inhibited, which enables the user to use the payment quickly and safely. In particular, when the command for instructing the mobile telephone 102 to execute the forcible invalidation is generated by using the mobile telephone network from the payment server 101 in order to inhibit the utilization of the electronic value, if the mobile telephone 102 is located outside the target region of the mobile cellular communication services or if the power source is OFF or the like, the command is not transmitted and received. Thus, the process of the present embodiment is effective under such situation.

The fifth embodiment of the present invention will be described below. This is a system where the electronic value can be lent and borrowed between a plurality of mobile telephones. In the user information storing unit 105 of the payment server 101, there are the user side information area 106 and the shop side information area 107 where the electronic value information having the money value to be used by the user is stored. Thus, this can be attained by storing the value of the lent electronic value in the shop side information area 107 of the mobile telephone which lends the electronic value and then carrying out the process based on the above-mentioned respective embodiments.

The above-mentioned respective embodiments are the preferable embodiments in the present invention. Then, various changed embodiments are possible. For example, by writing the programs for attaining the functions of the payment server 101, mobile telephone 102, value managing server 103 and paying terminal 103-1 in the respective embodiments to the respective apparatuses and then instructing the execution, it is possible to carry out the processes for attaining the functions of this system. Moreover, the program may be transmitted through a CD-ROM or optical magnetic disc or the like, which is a computer readable recording medium, or through the Internet, telephone line or the like, which is the propagation medium, to a different computer system.

With regard to the above-mentioned respective embodiments, the system configuration is explained in which the payment server 101, the mobile telephone 102, the value managing server 103 and the paying terminal 103-1 are the individual apparatuses connected to each other. However, this can be naturally applied to even the configuration where the respective functions are attained as one computer system or the configuration where a plurality of server apparatuses and the like are added for each function.

## Claims

1. A payment system comprising:
a value managing server (103) configured to receive authentication information (S201) from a mobile communication terminal (102) used for a payment and send an authentication result (S202) of an authentication of a validity of a function of paying of said mobile communication terminal in response to a received said authentication information to said mobile communication terminal;
said mobile communication terminal (102) configured to receive said authentication information (S202) from said value managing server (103) and send a payment request (S204) which includes received said authentication result, identification information assigned to said mobile communication terminal and to-be-paid electrical value information representing a value to be paid; and
a payment server (101) configured to store an accumulated electrical value information (106) which corresponds to said identification information, carry out a settlement based on said accumulated electrical value information and said to-be-paid electrical information when receiving said payment request (S204), and send certification information (S206) generated by said settlement to said mobile communication terminal.

2. The payment system according to claim 1, wherein said mobile communication terminal and said value managing server communicate said authentication information and said authentication result each other through an RFID (radio frequency identification) system (113, 114, 115).

3. The payment system according to claim 1,
wherein said accumulated electrical value information (106) is stored also in said mobile communication terminal (102),
said payment server (101) stores validity information indicating a validity of said accumulated electronic value information, and
said mobile communication terminal carries out a check of said validity information through a communication with said payment server at a predetermined timing.

4. The payment system according to claim 3,
wherein said payment server (101) forbids said settlement for said mobile communication terminal (102) identified by said identification information inputted to said payment server in response to a predetermined inquiry inputting operation in which said identification information is specified.

5. The payment system according to claim 3,
wherein said payment server (101) rejects said check by said mobile communication terminal (102) specified by said identification information inputted to said payment server in response to a predetermined inquiry inhibiting operation in which said identification information is specified.

6. The payment system according to claim 1, further comprising:
an another mobile communication terminal,
wherein said mobile communication terminal (102) sends said payment request in which said identification information specifying said mobile communication terminal itself when said mobile communication terminal receives a electrical value using request from said another mobile communication terminal.

7. The payment system according to claim 1, further comprising:
an another mobile communication terminal configured to receive said authentication information from said value managing server and send said payment request which includes received said authentication result, said identification information assigned to said another mobile communication terminal and said to-be-paid electrical value information representing a value to be paid,
wherein said mobile communication terminal (102) and said another mobile communication terminal transfer said electrical value information each other by using said accumulated electrical value information.

8. A paying method comprising the steps of:
a value managing server (103) receiving authentication information (S201) from a mobile communication terminal (102) used for a payment and send an authentication result (S202) of an authentication of a validity of a function of paying of said mobile communication terminal in response to received said authentication information to said mobile communication terminal;
said mobile communication terminal (102) receiving said authentication information (S202) from said value managing server (103) and send a payment request (S204) which includes received said authentication result, identification information assigned to said mobile communication terminal and to-be-paid electrical value information representing a value to be paid; and
a payment server (101) storing an accumulated electrical value information (106) which corresponds to said identification information, carrying out a settlement based on said accumulated electrical value information and said to-be-paid electrical information when receiving said payment request, and sending certification information (S206) generated by said settlement to said mobile communication terminal.

9. The paying method according to claim 8, wherein said mobile communication terminal and said value managing server communicate said authentication information and said authentication result each other through an RFID (radio frequency identification) system (113, 114, 115).

10. The paying method according to claim 8, further comprising the steps of:
said mobile communication terminal (102) storing said accumulated value information;
said payment server (101) storing validity information indicating a validity of said accumulated electronic value information; and
said mobile communication terminal (102) carrying out a check of said validity information through a communication with said payment server at a predetermined timing.

11. The paying method according to claim 10, further comprising the step of:
said payment server (101) forbidding said settlement for said mobile communication terminal (102) identified by said identification information inputted to said payment server in response to a predetermined inquiry inputting operation in which said identification information is specified.

12. The paying method according to claim 10, further comprising the step of:
said payment server (101) rejecting said check by said mobile communication terminal (102) specified by said identification information inputted to said payment server in response to a predetermined inquiry inhibiting operation in which said identification information is specified.

13. The paying method according to claim 8, further comprising the step of:
said mobile communication terminal (102) sending said payment request (S204) in which said identification information specifying said mobile communication terminal itself when said mobile communication terminal receives an electrical value using request from an another mobile communication terminal.

14. The paying method according to claim 8, further comprising the steps of:
an another mobile communication terminal receiving said authentication information from said value managing server and sending said payment request which includes received said authentication result, said identification information assigned to said another mobile communication terminal and said to-be-paid electrical value information representing a value to be paid; and
said mobile communication terminal and said another mobile communication terminal transferring said electrical value information each other by using said accumulated electrical value information.

15. A computer readable software product for executing a paying method carried out by a mobile communication terminal (102), the method comprises the steps of:
sending authentication information (S201) to a value managing server (103) through an RFID system;
receiving an authentication result (S202) of an authentication of a validity of a function of a paying of said mobile communication terminal generated by said value managing server in response to said authentication information through said RFID system (113, 114, 115);
sending a payment require (S204) which includes said authentication result, identification information assigned to said mobile communication terminal and to-be-paid electrical value information representing a value to be paid to a payment server through a mobile communication base station are included; and
receiving certification information issued by a settlement operation of said payment server in response to said payment request.
